# EUROPEAN PATENT APPLICATION

(11) **EP 4 207 937 A1**
(43) Date of publication of application: **05.07.2023**
(21) Application number: 21908669.1
(22) Date of filing: 14.09.2021
(51) Int. Cl.: H04W 80/02

(54) **PARAMETER FEEDBACK METHOD, PARAMETER UPDATE METHOD, ASSOCIATION METHOD, COMMUNICATION NODE, COMMUNICATION SYSTEM, AND MEDIUM**

(30) Priority: 22.12.2020 CN 202011529861
(71) Applicant: ZTE Corporation, Shenzhen, Guangdong 518057 (CN)
(72) Inventor: LU, Liuming, Shenzhen, Guangdong 518057 (CN); YUAN, Liquan, Shenzhen, Guangdong 518057 (CN)
(74) Representative: Aipex B.V.
(86) International application number: PCT/CN2021/118277
(87) International publication number: WO 2022/134667

(57) **Abstract**

Provided are a parameter feedback method, a parameter update method, an association method, a communication node, a communication system and a storage medium. The parameter feedback method includes: recording, during a period that a PPDU sent by a first station in a non-access point multi-link device is received through a first link, network transmission and state update information about an NAV of a second station in the non-access point multi-link device in a BSS where a second link is located, where the access point multi-link device is connected to the non-access point multi-link device through the first link and the second link, and the first link and the second link of the non-access point multi-link device do not support simultaneous transmission and reception; determining a feedback state on an NAV update parameter of the second station according to the network transmission and state update information, where the feedback state includes feedback or non-feedback; and in a case where the feedback state is feedback, feeding back the NAV update parameter to the non-access point multi-link device through the first link after a specific frame interval after an end of reception of the PPDU.

## Description

### TECHNICAL FIELD

The present application relates to wireless communication networks, for example, a parameter feedback method, a parameter update method, an association method, a communication node, a communication system and a storage medium.

### BACKGROUND

For a multi-link device (MLD), if the subordinate stations are all Access Points (APs), the MLD is an AP MLD, or if the attached stations are all Stations (STAs) of Non-AP (Non-AP), the MLD is a Non-AP MLD. The STAs in the Non-AP MLD and the APs in the AP MLD may communicate over different links. In a multi-link communication system, there is a multi-link device that does support Non-Simultaneous Transmit and Receive (NSTR). In a process of transmitting data by a link in a link set that does support the Non-Simultaneous Transmit and Receive, other links cannot receive data, resulting in loss of parameters related to a Network Allocation Vector (NAV). In this case, the station cannot determine a busy/idle state of a channel and an occupation time of a wireless medium, thereby causing conflict with the data transmitted by other links. At present, there is no effective solution mechanism to ensure that the station can acquire parameters related to the NAV.

### SUMMARY

The present application provides a parameter feedback method, a parameter update method, an association method, a communication node, a communication system and a medium, so as to feed back an NAV to the non-access point multi-link device and improve the reliability of multi-link communication.

Embodiments of the present application provide a parameter feedback method. The method is applied to an AP MLD and includes the following.

During a period that a physical layer (PHY) protocol data unit (PPDU) sent by a first station in a non-access point multi-link device is received through a first link, network transmission and state update information about an NAV of a second station in the non-access point multi-link device in a basic service set (BSS) where a second link is located is recorded, where the AP MLD is connected to the non-access point multi-link device through the first link and the second link, and the first link and the second link of the non-access point multi-link device do not support simultaneous transmission and reception.

A feedback state on an NAV update parameter of the second station is determined according to the network transmission and state update information, where the feedback state includes feedback or non-feedback.

In a case where the feedback state is feedback, the NAV update parameter is fed back to the non-access point multi-link device through the first link after a specific frame interval after an end of reception of the PPDU.

Embodiments of the present application further provide a parameter update method. The method is applied to a non-access point multi-link device and includes the following.

After a specific frame interval after an end of a first station sending a physical layer protocol data unit (PPDU) to an AP MLD through a first link, an NAV update parameter of a second station in the non-access point multi-link device is acquired through the first link, where the NAV update parameter is determined according to network transmission and state update information of an NAV of the second station in a BSS where the second link is located.

In a case where the NAV update parameter is acquired, a local NAV parameter is updated according to the NAV update parameter.

Embodiments of the present application further provide an association method. The method includes the following.

Multi-link capability information is broadcasted, where broadcasting the multi-link capability information includes supporting capability of the AP MLD to feed back an NAV update parameter.

An association request of a non-access point multi-link device is received, where the association request is used for determining a link connection relationship between the AP MLD and the non-access point multi-link device, supporting capability of a link for simultaneous transmission and reception, and supporting capability of a station in the non-access point multi-link device to receive the NAV update parameter.

Association response information is sent to the non-access point multilink device according to the association request.

Embodiments of the present application further provide an association method. The method includes the following.

Multi-link capability information of an AP MLD is received, where broadcasting the multi-link capability information includes supporting capability of the AP MLD to feed back an NAV update parameter.

An association request is sent to the AP MLD according to the multi-link capability information, where the association request is used for determining a link connection relationship between the AP MLD and the non-access point multi-link device, supporting capability of a link for simultaneous transmission and reception, and supporting capability of a station in the non-access point multi-link device to receive the NAV update parameter.

Embodiments of the present application further provide a communication node. The communication node includes a memory, a processor, and a computer program stored on the memory and running on the processor, where when executing the program, the processor performs the parameter feedback method, the parameter update method or the association method.

Embodiments of the present application further provide a communication system. The communication system includes an access point multi-link device and a non-access point multi-link device.

The access point multi-link device is configured to perform the parameter feedback method or the association method applied to the AP MLD.

The non-access point multi-link device is configured to perform the parameter update method or the association method applied to the non-access point multi-link device.

Embodiments of the present application further provide a computer-readable storage medium for storing a computer program which, when executed by a processor, implements the preceding parameter feedback method, the parameter update method or the association method.

### BRIEF DESCRIPTION OF DRAWINGS

FIG. 1 is a schematic diagram of data transmission conflict among multi-link devices according to an embodiment;
FIG. 2 is a flowchart of a parameter feedback method according to an embodiment;
FIG. 3 is a schematic diagram of an AP MLD feeding back an NAV update parameter to a non-access point multilink device according to an embodiment;
FIG. 4 is a schematic diagram of feeding back an NAV update parameter according to an embodiment;
FIG. 5 is a schematic diagram of a media access control (MAC) frame including NAV policy information according to an embodiment;
FIG. 6 is a schematic diagram of an NAV control frame including NAV policy information according to an embodiment;
FIG. 7 is a schematic diagram of an acknowledgement frame (ACK) including NAV policy information according to an embodiment;
FIG. 8 is a flowchart of a parameter update method according to an embodiment;
FIG. 9 is a flowchart of an association method according to an embodiment;
FIG. 10 is a schematic diagram of an association process between an AP MLD and a non-access point multi-link device according to an embodiment;
FIG. 11 is a flowchart of an association method according to another embodiment;
FIG. 12 is a hardware structural diagram of a communication node according to an embodiment; and
FIG. 13 is a structural diagram of a communication system according to an embodiment.

### DETAILED DESCRIPTION

The present application is described hereinafter in conjunction with drawings and embodiments.

In multi-link communication, simultaneous transmission and reception refers to simultaneous transmitting and receiving data on two links of the same MLD. If the isolation between channels of different links in the MLD is low, intra-device coexistence interference is easily caused. Therefore, in many application scenes, simultaneous transmission and reception of the MLD device on different links is not supported. The MLD device is divided into two types: an AP MLD and a Non-AP MLD. An NAV is equivalent to a counter and can be used for reflecting the busy and idle of the channel, and the Non-AP MLD device can determine when the data transmission can be performed according to the NAV, thereby effectively avoiding the conflict with the data being transmitted on the same link. However, for the Non-AP MLD device of the NSTR, since the second link cannot receive data in the process of transmitting data through the first link, that is, the second link cannot receive a network transmission control parameter such as an NAV from the AP MLD, the second link cannot determine an appropriate time for data transmission, resulting in data transmission conflict of other stations using the second link in the BSS.

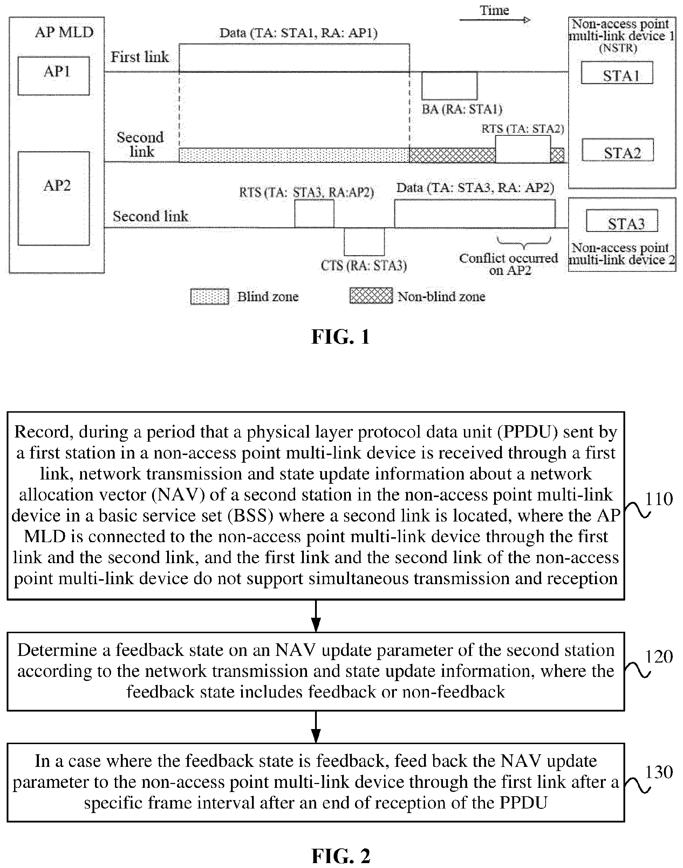

FIG. 1 is a schematic diagram of data transmission conflict among multi-link devices according to an embodiment. As shown in FIG. 1, the AP MLD and the Non-AP MLD are connected through the first link and the second link, and the first link and the second link are links of the NSTR. In the process in which the STA1 sends data to the AP MLD through the first link, the STA2 is unable to receive the data of the AP MLD, causing the NAV information of the STA2 on the second link to be lost, the STA2 is unable to update the NAV in time and determines the transmission opportunity only by using the locally stored erroneous NAV and transmitting the data immediately after the transmission opportunity is acquired, so that a conflict occurs with the ongoing data transmission (that is, the data transmission between the STA3 and AP2) on the second link at the AP2 end. In FIG. 1, TA represents a transmitting end and RA represents a receiving end, RTS represents a request to send (RTS) frame, and CTS represents a clear to send (CTS) frame, the dotted region represents a blind zone that STA2 is unable to receive the NAV on the second link, the grid region represents that the data transmission on the first link has been completed and STA2 can perform data transmission in this region, and STA3 and STA2 belongs to one BSS.

In the embodiments of the present application, a parameter feedback method is provided, during a period that the Non-AP MLD of the NSTR sends data to the AP MLD through the first link (that is, during a period that the Non-AP MLD is located in the blind zone of the second link), the network transmission and state update information about the NAV of the second station are recorded, and the NAV update parameter of the second station is fed back through the first link, so that the NAV loss due to the blind zone and the data transmission conflict problem are solved in the process of the multi-link communication.

FIG. 2 is a flowchart of a parameter feedback method according to an embodiment. The method provided by this embodiment can be applied to the AP MLD, particularly to an access point, such as AP2 in FIG. 1. As shown in FIG. 2, the method provided in this embodiment includes 110, 120 to 130.

In 110, during a period that a PPDU sent by a first station in a non-access point multi-link device is received through a first link, network transmission and state update information about an NAV of a second station in the non-access point multi-link device in a BSS where a second link is located is recorded, where the AP MLD is connected to the non-access point multi-link device through the first link and the second link, and the first link and the second link of the non-access point multi-link device do not support simultaneous transmission and reception.

In this embodiment, the AP MLD may include multiple access points, or the Non-AP MLD may include multiple stations. In a link set in which the Non-AP MLD does not support simultaneous transmission and reception, any link may send the PPDU to the AP MLD after acquiring the transmission opportunity, and the link is denoted as a first link. A station corresponding to the first link is a first station, and other links (that is, a second link) in the link set do not support receiving data during a period that the first link sends the PPDU. The links in the link set are in the enable state (i.e., in the data transmitting and receiving state). The Non-AP MLD sends the PPDU to the AP MLD through the first link, and triggers the AP MLD to record the network transmission and state update information of the second station of the second link. The network transmission and state update information includes the busy/idle state of the channel of the second link, the expected transmission time, the length of the transmission data, and the like. The AP MLD may determine the NAV value of the transmission data of the second station on the second link to feed back to the Non-AP MLD according to the information, thereby indicating the second station to wait for corresponding duration before performing the data transmission, thus avoiding the conflict on the second link. It is to be noted that the access point for recording the network transmission and state update information of the second link may be different from the access point for receiving the PPDU of the first station. For example, in FIG. 1, in a case where STA1 sends the PPDU to the AP1 through the first link, the AP2 is triggered to record the network transmission and state update information of the second link.

In 120, a feedback state on an NAV update parameter of the second station is determined according to the network transmission and state update information, where the feedback state includes feedback or non-feedback.

In this embodiment, the AP MLD determines whether to feed back the NAV update parameter to the Non-AP MLD according to the recorded network transmission and state update information, and the NAV update parameter is used for indicating the Non-AP MLD to update the locally stored NAV. For example, the AP MLD calculates the NAV update parameter of the second station according to the recorded network transmission and state update information, and after the PPDU in the first link is sent, the AP MLD always feeds the NAV update parameter back to the Non-AP MLD regardless of whether the NAV of the second station is 0, or the AP MLD merely feeds back the NAV update parameter to the Non-AP MLD in a case where the NAV of the second station is greater than 0.

In an embodiment, the access point for recording the network transmission and state update information of the second link is different from the access point for receiving the PPDU of the first station. In this case, the access point for recording the network transmission and state update information of the second link may forward the NAV update parameter to be fed back to the Non-AP MLD through the first link.

In 130, in a case where the feedback state is feedback, the NAV update parameter is fed back to the Non-AP MLD through the first link after a specific frame interval after an end of reception of the PPDU.

In this embodiment, in a case where the NAV update parameter is determined to be fed back to the Non-AP MLD, the AP MLD feeds back the NAV update parameter to the Non-AP MLD through the first link after the specific frame interval at the end of sending the PPDU in the first link, so that in the case that the second link cannot receive data, the feedback of the NAV update parameters is achieved by means of the first link, the Non-AP MLD can acquire the NAV update parameter during the enabling period of the link set of the NSTR, reasonably determine the transmission opportunity of the second station on the second link, and effectively avoid the conflict with the ongoing data transmission of other stations on the second link.

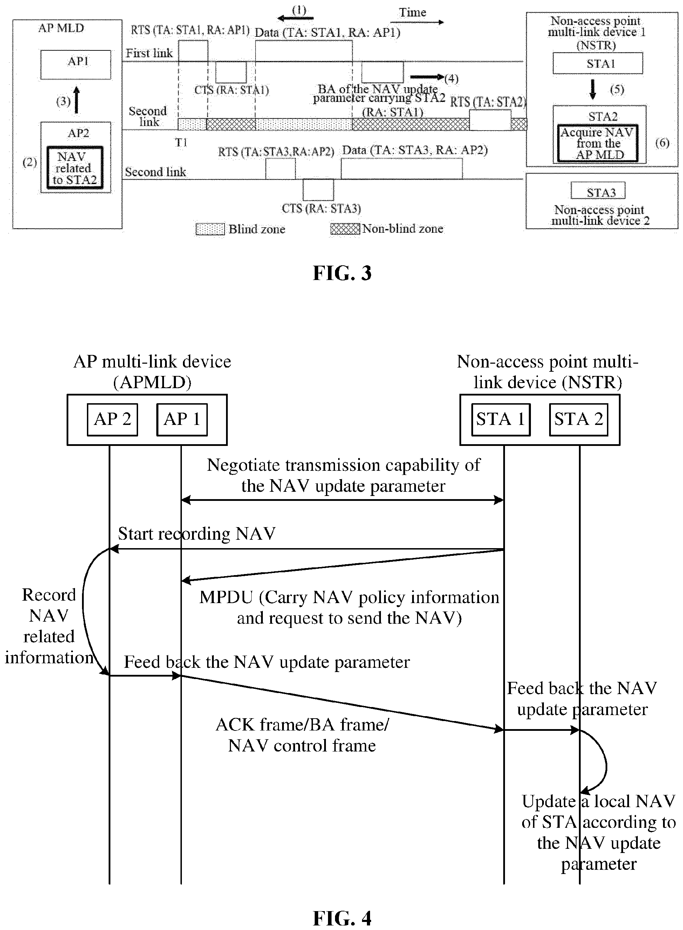

FIG. 3 is a schematic diagram of an AP MLD feeding back an NAV update parameter to a non-access point multilink device according to an embodiment. As shown in FIG. 3, (1) STA1 sends the PPDU to AP1; (2) AP2 records the network transmission and state update information about STA2; (3) AP2 determines the NAV update parameter according to the recorded network transmission and state update information, and sends the NAV update parameter to AP1; (4) AP1 sends the NAV update parameter to STA1 through the first link; (5) STA1 sends the NAV update parameter to STA2; and (6) STA2 updates the local NAV parameter according to the NAV update parameter. On this basis, STA2 may reasonably determine the time of sending the RTS frame to AP2 through the second link, and avoid the time of sending the data from STA3 in the same BSS to AP2 through the second link, thereby avoiding the conflict of data transmission on the second link.

In an embodiment, the method further includes 112: generating the NAV update parameter according to the network transmission and state update information.

Specifically, the network transmission and state update information includes the busy/idle state of the channel of the second link, expected transmission time of data, the length of transmission data, and the like of other stations in the same BSS on the second link. The AP MLD can determine the NAV value for the data transmission of the second station on the second link by recording the information, so as to indicate the second station to wait for corresponding duration to acquire the transmission opportunity, thereby avoiding the conflict of data transmission between different stations in the same BSS on the second link.

In an embodiment, 112 includes setting the NAV update parameter to an initial value, and updating the NAV update parameter according to at least one of the following: in a case where a CTS frame is sent to a third station through the BSS where the second link is located, updating the NAV update parameter according to the duration information indicated by the CTS frame; in a case where the PPDU of the third station is received through the BSS where the second link is located, updating the NAV update parameter according to the duration information indicated by the PPDU of the third station; or in a case where the transmission opportunity of the BSS where the second link is located is acquired and the PPDU is sent to the third station through the BSS where the second link is located, updating the NAV update parameter according to the duration information of the transmission opportunity or the duration information indicated by the PPDU sent to the third station.

In this embodiment, the AP MLD generates the NAV update parameter related to the second station in the process of being triggered to record the network transmission and state update information. The initial value of the NAV update parameter is set to zero. During sending the PPDU on the first link, a value is assigned to the NAV update parameter according to the data transmission case of the second link and the BSS where the second link is located. In addition, in the process of assignment, the NAV update parameter is also reduced in real time with the change of time. The assignment process includes at least one of the following:
1) The AP MLD sends the CTS frame through the BSS where the second link is located to indicate the third station to send data, and then assigns the duration information indicated by the CTS frame to the NAV update parameter.
2) The AP MLD receives the PPDU from the third station through the BSS where the second link is located, and assigns the duration information indicated on the PPDU to the NAV update parameter.
3) The AP MLD acquires the transmission opportunity on the second link and sends the PPDU to the third station or triggers the third station to send the uplink data through the BSS where the second link is located, and then assigns the duration information indicated by the PPDU or the duration information of the transmission opportunity to the NAV update parameter.

In an embodiment, 130 includes the following:
In a case where the NAV update parameter is 0 or non-0, the NAV update parameter is fed back to the Non-AP MLD through the first link; or in a case where the NAV update parameter is greater than 0, the NAV update parameter is fed back to the Non-AP MLD through the first link.

In this embodiment, the AP MLD calculates the NAV update parameter of the second station according to the recorded network transmission and state update information, and after the PPDU in the first link is sent, in one case, the AP MLD always feeds the NAV update parameter back to the Non-AP MLD regardless of whether the NAV of the second station is 0, or in another case, the AP MLD merely feeds back the NAV update parameter to the Non-AP MLD in a case where the NAV of the second station is greater than 0. The NAV of the second station is greater than 0, it represents that the second station needs to wait for certain time to transmit data. If the NAV is equal to 0, the second station does not need to wait and can transmit data at any time after the PPDU transmission is completed. In this case, the NAV may not be fed back, and the second station does not need to update the local NAV parameter.

In an embodiment, 130 includes sending the NAV update parameter to the second station through an access point associated with the first link in the AP MLD and the first station in sequence.

In an embodiment, the access point in the AP MLD for recording the network transmission and state update information of the second link is different from the access point for receiving the PPDU of the first station. In this case, the access point for recording the network transmission and state update information of the second station may forward the NAV update parameter to be fed back to the second station through the first link (the link from the access point for receiving the PPDU of the first station to the first station).

In an embodiment, the NAV update parameter is fed back through an acknowledgement reply frame including an acknowledge (ACK) frame or a block acknowledge (BA) frame; or the NAV update parameter is fed back through an NAV control frame, and the NAV control frame is fed back after a first frame interval after the PPDU of the first station is transmitted or after the second frame interval after the acknowledgement reply frame is transmitted.

FIG. 4 is a schematic diagram of feeding back an NAV update parameter according to an embodiment. As shown in FIG. 4, the AP MLD and the Non-AP MLD first negotiates the transmission capability of the NAV update parameter, for example, whether the AP MLD supports recording the network transmission and state update information of the second station, whether the AP MLD supports feeding back the NAV update parameter to the Non-AP MLD, whether the Non-AP MLD supports receiving the NAV update parameter through the first link, the connection relationship between the AP MLD AND Non-AP MLD, and the like. In the process in which the Non-AP MLD sends the MAC layer protocol data unit (MPDU) to the AP-MLD through the first link in the link set of the NSTR, that is, the process in which the MAC frame is sent, the MPDU carries NAV policy information to request the AP MLD to feed back the NAV update parameters corresponding to links other than the first link in the link set of the NSTR. For example, AP 1 immediately triggers AP2 to record the network transmission and state update information of the second link upon receiving the preamble or MPDU frame header information of the PPDU where the MPDU is located. After the MPDU reception ends, AP2 feeds back the NAV update parameter to AP 1, and AP 1 sends the ACK frame including the NAV update parameter or the BLOCK ACK frame or the NAV control frame to STA1 of the Non-AP MLD, STA1 immediately feeds back the NAV update parameter to the STA2 upon receiving the NAV update parameter, and STA2 updates the local NAV parameter according to the NAV update parameter.

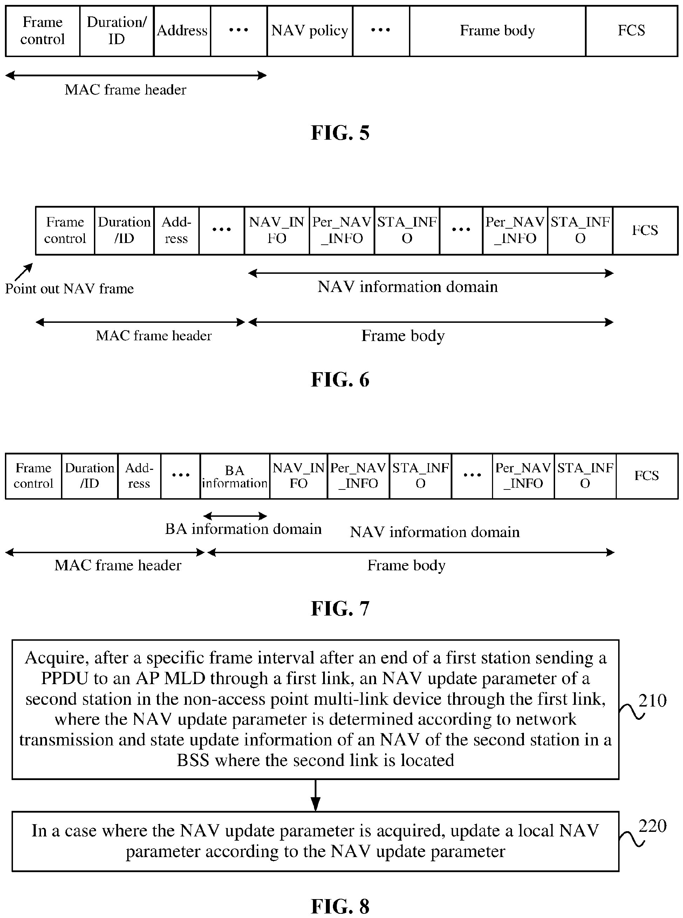

FIG. 5 is a schematic diagram of a media access control (MAC) frame including NAV policy information according to an embodiment. As shown in FIG. 5, the MAC frame header includes a frame control field (for indicating which frame type it is), a duration/identity (ID) field (for indicating the expected transmission duration of the frame where the MAC frame header is located or the serial number of the frame where the MAC frame header is located), an address field (for indicating the receiver or sender of the frame), and an NAV policy field. The frame body includes transmitted valid data, and the frame body can also be followed by a frame check sequence (FCS). The NAV policy field is used for representing whether the Non-AP MLD requests the AP MLD to feed back the NAV update parameter. For example, the NAV policy field has three values. The first value represents that the NAV update parameter is not fed back. The second value represents that the NAV update parameter is fed back regardless of whether the NAV update parameter is 0. The third value represents that the NAV update parameter is not fed back when the NAV update parameter is 0, and the NAV update parameter is fed back when the NAV update parameter is greater than 0. Alternatively, the NAV policy field may have two values. The first value represents that the NAV update parameter is not fed back, and a second value represents that the NAV update parameter is fed back.

FIG. 6 is a schematic diagram of an NAV control frame including NAV policy information according to an embodiment. As shown in FIG. 6, the MAC frame header of the NAV control frame includes a frame control field, a duration/ID field, and an address field. The frame body includes an NAV information domain, and the NAV information field is composed of instances of NAV_INFO (for indicating the number of NAV update parameters carried), at least one Per_NAV_INFO (for indicating the value of the NAV update parameter) and at least one STA_INFO (for indicating the station corresponding to the NAV update parameter). The frame body is also followed by a frame check sequence.

FIG. 7 is a schematic diagram of an ACK frame including NAV policy information according to an embodiment. As shown in FIG. 7, the frame header of the ACK frame includes a frame control field, a duration/ID field, and an address field. The frame body includes a BA information domain (for indicating whether the transmission of the data block is successful) and the NAV information domain, and the NAV information domain is composed of instances of NAV_INFO, at least one Per_NAV_INFO and at least one STA_INFO. The frame body is also followed by a frame check sequence. In FIGS. 6 and 7, the content of the NAV information domain may be the same.

In an embodiment, the method further includes 100: broadcasting multi-link capability information, where the multi-link capability information includes at least one of the following: at least one access point in the AP MLD supports or does not support carrying an NAV update parameter of other links other than a link where the at least one access point is located; or at least one access point in the AP MLD supports or does not support carrying a feeding back operation parameter of the NAV of other links other than a link where the at least one access point is located.

In this embodiment, the negotiation of the transmission capability of the NAV update parameter may be performed at the stage of MLD establishing association, or may be performed in the process of initiating the multi-link operation at the first station after the MLD establishing association. The AP MLD broadcasts multi-link capability through a beacon, for example, whether an access point in the Non-AP MLD supports carrying the NAV update parameter of the second station, and whether the access point in the Non-AP MLD supports carrying a feeding back operation parameter of the NAV through the first link, for example, feeding back the NAV supports which of the following feedback modes: 1) feeding back through the acknowledgement reply frame, where the acknowledgement reply frame includes an ACK frame or a BA frame; 2) feeding back through the control frame.

In an embodiment, the method further includes 102: receiving an association request and determining, according to the association request, at least one of the following information: a station associated with each access point of the AP MLD in the Non-AP MLD, a link connection relationship between the AP MLD and the Non-AP MLD, a link that does not support simultaneous transmission and reception, supporting capability of the AP MLD to feed back the NAV update parameter, supporting capability of a station in the Non-AP MLD to receive the NAV update parameter, or a feeding back operation parameter of the NAV.

In this embodiment, the Non-AP MLD selects a station as a STA (i.e., a first station) initiating a multi-link operation, and sends an association request to the AP MLD, where the association request points out associated stations (including the first station and the second station) in the Non-AP MLD, may further indicate that the first link and the second link are links of the NSTR, and whether the associated stations in the Non-AP MLD support receiving the NAV update parameters through the associated link, may also be used for requesting to determine whether the access point in the AP MLD supports feeding back the NAV update parameter of the stations in the Non-AP MLD, and may also be used for requesting to determine related operation parameters, such as the operation parameters for feeding back the NAV.

In an embodiment, the PPDU includes preamble or MPDU frame header information, and the preamble or the MPDU frame header information is used for triggering and recording the network transmission and state update information.

In this embodiment, the AP MLD immediately triggers and records the network transmission and state update information of the second link upon receiving the preamble or MPDU frame header information of the PPDU where the MPDU is located.

In an embodiment, the MPDU corresponding to the PPDU includes NAV policy indication information, and the NAV policy indication information is used for indicating at least one of not feeding back the NAV update parameter, feeding back the NAV update parameter in a case where the NAV update parameter is 0 or non-0, or feeding back the NAV update parameter in a case where the NAV update parameter is greater than 0.

In this embodiment, the NAV policy field has three values. The first value represents that the NAV update parameter is not fed back. The second value represents that the NAV update parameter is fed back regardless of whether the NAV update parameter is 0. The third value represents that the NAV update parameter is not fed back when the NAV update parameter is 0, and the NAV update parameter is fed back when the NAV update parameter is greater than 0. Alternatively, the NAV policy field may have two values. The first value represents that the NAV update parameter is not fed back, and a second value represents that the NAV update parameter is fed back.

In an embodiment, the NAV control frame is used for indicating the number of pieces of carried network transmission and state update information, an NAV value, and a target station corresponding to the network transmission and state update information.

In this embodiment, the NAV control frame is used for indicating the number of pieces of carried network transmission and state update information and the NAV value through the NAV_INFO, for indicating the value of the NAV update parameter through at least one Per_NAV_INFO, and for indicating the target station corresponding to the NAV update parameter through at least one STA_INFO.

In the embodiments of the present application, a parameter update method is provided, during a period that the Non-AP MLD of the NSTR sends data to the AP MLD through the first link (that is, during a period that the Non-AP MLD is located in the blind zone of the second link), the NAV update parameter is received through the first link, and a local NAV parameter is updated accordingly as a basis for determining a data transmission opportunity, so as to solve a data transmission conflict problem in a multi-link communication process.

FIG. 8 is a flowchart of a parameter update method according to an embodiment. The method provided by this embodiment can be applied to the Non-AP MLD, specifically, to a second station. As shown in FIG. 8, the method provided in this embodiment includes 210, and 220. For technical details not described in detail in the embodiment, reference may be made to any one of the preceding embodiments.

In 210, after a specific frame interval after an end of a first station sending a PPDU to an AP MLD through a first link, an NAV update parameter of a second station in the non-access point multi-link device is acquired through the first link, where the NAV update parameter is determined according to network transmission and state update information of an NAV of the second station in a BSS where the second link is located.

In 220, in a case where the NAV update parameter is acquired, a local NAV parameter is updated according to the NAV update parameter.

In this embodiment, the Non-AP MLD compares the NAV update parameter received through the first link with local NAV parameter, if the NAV update parameter is zero, the local NAV parameter can be continuously adopted; if the NAV update parameter is greater than the local NAV parameter, a corresponding update operation is performed, for example, a value is obtained by subtracting the transmission time of the NAV update parameter from the NAV update parameter and then converted into a value having the unit of the NAV, and the converted value serves as the updated NAV parameter of the second station; or if the NAV update parameter is less than the local NAV parameter, the local NAV parameter may continue to be used.

In an embodiment, 220 includes: in a case where the NAV update parameter is 0, using the local NAV parameter as an updated local NAV parameter; in a case where the NAV update parameter is greater than the local NAV parameter, using a difference between a NAV value corresponding to a transmission time of the NAV update parameter and the NAV update parameter as an updated local NAV parameter; or in a case where the NAV update parameter is less than the local NAV parameter, using the local NAV parameter as an updated local NAV parameter.

In an embodiment, the NAV update parameter is sent to the second station through an access point associated with the first link in the AP MLD and the first station in sequence.

In an embodiment, the NAV update parameter is acquired through an acknowledgement reply frame including an ACK frame or a BA frame; or the NAV update parameter is acquired through an NAV control frame, and the NAV control frame is acquired after a first frame interval after the PPDU of the first station is transmitted or after the second frame interval after the acknowledgement reply frame is transmitted.

In an embodiment, the method further includes the following.

In 220, multi-link capability information is received, where the multi-link capability information includes at least one of the following:
At least one access point in the AP MLD supports or does not support carrying an NAV update parameter of other links other than the link where the at least one access point is located.

At least one access point in the AP MLD supports or does not support carrying a feeding back operation parameter of the NAV of other links other than a link where the at least one access point is located.

In an embodiment, the method further includes the following.

In 202, an association request is sent, where the association request is used for requesting at least one of the following information: a station associated with each access point of the AP MLD in the Non-AP MLD, a link connection relationship between the AP MLD and the Non-AP MLD, a link that does not support simultaneous transmission and reception, supporting capability of the AP MLD to feed back the NAV update parameter, supporting capability of a station in the Non-AP MLD to receive the NAV update parameter, or a feeding back operation parameter of the NAV.

In an embodiment, the PPDU includes preamble or MPDU frame header information, and the preamble or the MPDU frame header information is used for triggering and recording the network transmission and state update information.

In an embodiment, the MPDU corresponding to the PPDU includes NAV policy indication information, and the NAV policy indication information is used for indicating at least one of not feeding back the NAV update parameter, feeding back the NAV update parameter in a case where the NAV update parameter is 0 or non-0, or feeding back the NAV update parameter in a case where the NAV update parameter is greater than 0.

In an embodiment, the NAV control frame is used for indicating the number of pieces of carried network transmission and state update information, an NAV value, and a target station corresponding to the network transmission and state update information.

In embodiments of the present application, an association method is further provided and applied to the AP MLD. The AP MLD establishes a multi-link connection of the NSTR by broadcasting the multi-link capability information and responding the association request of the Non-AP MLD, so that the first link can be provided for feeding back the NAV update parameter during the period that the second link is in the blind zone. For technical details not described in detail in the embodiment, reference may be made to any one of the preceding embodiments.

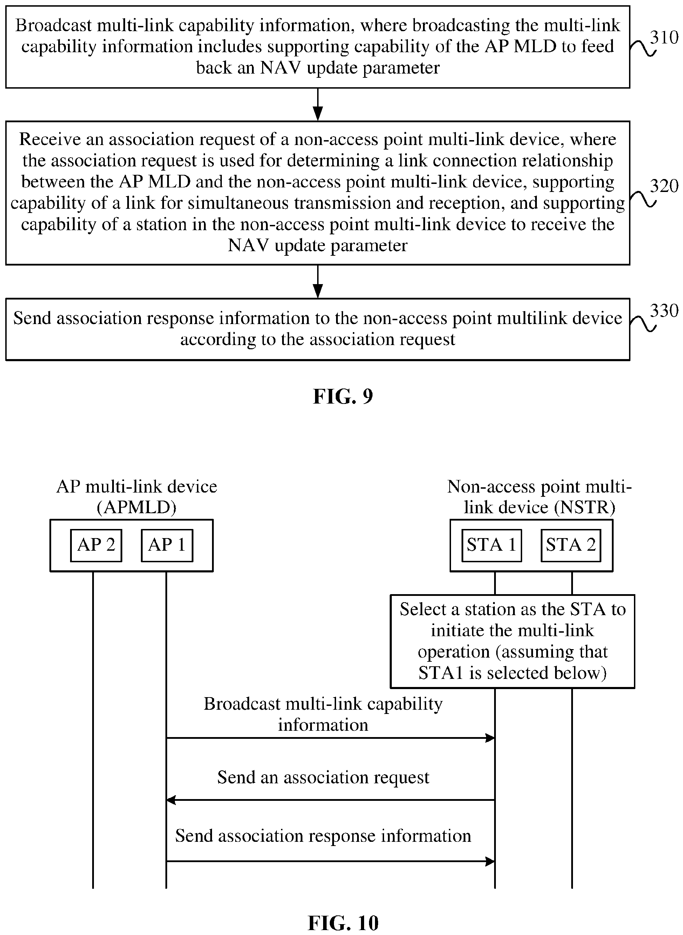

FIG. 9 is a flowchart of an association method according to an embodiment. As shown in FIG. 9, the method according to the present embodiment includes 310, 320 and 330.

In 310, multi-link capability information is broadcasted, where the multi-link capability information includes supporting capability of the AP MLD to feed back an NAV update parameter.

In this embodiment, the multi-link capability information includes whether the AP MLD supports carrying the NAV update parameter of the second station of the Non-AP MLD in the first link and/or carrying the feeding back operation parameter of the NAV in the first link. After the broadcast is received, the Non-AP MLD may send the association request to the AP MLD.

In 320, an association request of the Non-AP MLD is received, where the association request is used for determining a link connection relationship between the AP MLD and the Non-AP MLD, supporting capability of a link for simultaneous transmission and reception, and supporting capability of a station in the Non-AP MLD to receive the NAV update parameter.

In this embodiment, the Non-AP MLD selects a station as a STA (i.e., a first station) initiating a multi-link operation, and sends an association request to the AP MLD, where the association request points out associated stations (including the first station and the second station) in the Non-AP MLD, may further indicate that the first link and the second link are links of the NSTR, and whether the associated stations in the Non-AP MLD support receiving the NAV update parameters through the associated link, may also be used for requesting to determine whether the access point in the AP MLD supports feeding back the NAV update parameter of the stations in the feedback Non-AP MLD, and may also be used for requesting to determine related operation parameters, such as the operation parameters for feeding back the NAV.

In 330, association response information is sent to the non-access point multilink device according to the association request.

In this embodiment, the AP MLD sends the association response information to the Non-AP MLD, and the association response information is used for acknowledging whether the related stations (the first station and the second station) in the MLD is associated and for acknowledging the capabilities information of the access point in the AP MLD to represent whether the access point supports feeding back the NAV update parameter of the station in the Non-AP MLD, and may also be used for requesting to determine related operation parameters, such as the operation parameters for feeding back the NAV.

FIG. 10 is a schematic diagram of an association process between an AP MLD and a non-access point multi-link device according to an embodiment. As shown in FIG. 10, STA1 is selected as the first station initiating the multi-link operation, the AP1 broadcasts the multi-link capability information, STA1 sends the association request to AP1, and AP1 sends an association response message to STA1, thus completing the association between the AP MLD and the Non-AP MLD. On this basis, the feedback of the NAV update parameter can be achieved through the first link during the period that the second link is in the blind zone, thereby achieving the update of the local NAV parameter of the second station.

In an embodiment, the method further 340: performing the parameter feedback method described above according to the association response information.

In embodiments of the present application, an association method is further provided and applied to the Non-AP MLD. The Non-AP MLD establishes a multi-link connection of the NSTR by sending an association request and receiving association response information of the AP MLD, so that the NAV update parameter fed back can be received through the first link during the period that the second link is in the blind zone, thereby updating a local NAV parameter. For technical details not described in detail in the embodiment, reference may be made to any one of the preceding embodiments.

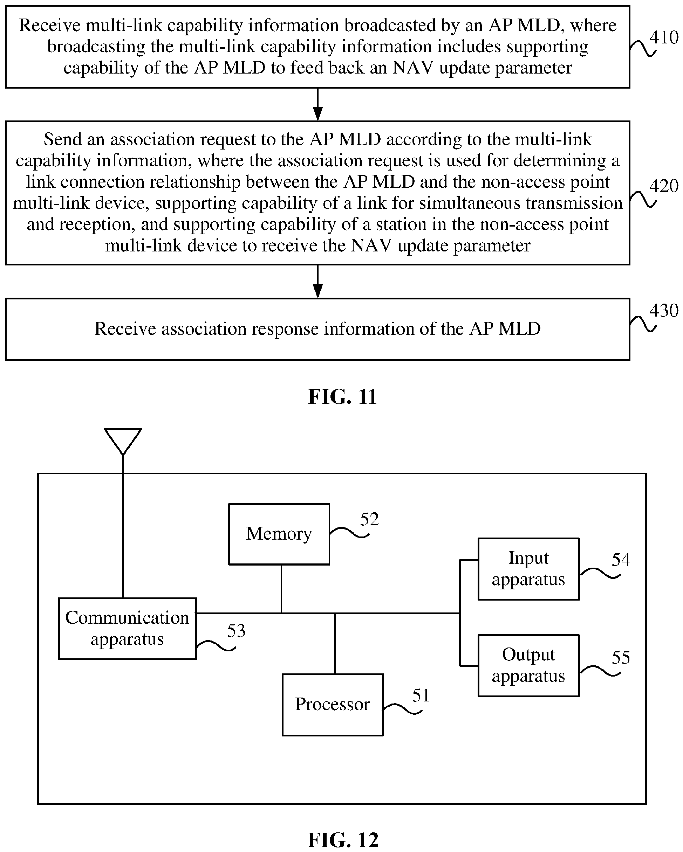

FIG. 11 is a flowchart of an association method according to another embodiment. As shown in FIG. 11, the method according to the present embodiment includes 410, 420 and 430.

In 410, multi-link capability information of an AP MLD is received, where the multi-link capability information includes supporting capability of the AP MLD to feed back an NAV update parameter.

In 420, an association request is sent to the AP MLD according to the multi-link capability information, where the association request is used for determining a link connection relationship between the AP MLD and the non-access point multi-link device, supporting capability of a link for simultaneous transmission and reception, and supporting capability of a station in the non-access point multi-link device to receive the NAV update parameter.

In 430, association response information of the AP MLD is received.

In an embodiment, the method further includes the following.

In 440, the parameter update method described above is performed according to the association response information.

Embodiments of the present application further provide a parameter feedback apparatus. The parameter feedback apparatus includes a recording module, a feedback state determination module and a feedback module.

The recording module is configured to record, during a period that a PPDU sent by a first station in a Non-AP MLD is received through a first link, network transmission and state update information about an NAV of a second station in the Non-AP MLD in a BSS where a second link is located, where the AP MLD is connected to the Non-AP MLD through the first link and the second link, and the first link and the second link of the Non-AP MLD do not support simultaneous transmission and reception.

The feedback state determination module is configured to determine a feedback state on an NAV update parameter of the second station according to the network transmission and state update information, where the feedback state includes feedback or non-feedback.

The feedback module is configured to feed back, in a case where the feedback state is feedback, the NAV update parameter to the Non-AP MLD through the first link after a specific frame interval after an end of reception of the PPDU.

In the embodiments of the present application, during a period that the Non-AP MLD of the NSTR sends data to the AP MLD through the first link (that is, during a period that the Non-AP MLD is located in the blind zone of the second link), the parameter feedback apparatus feeds back the NAV through the first link, so as to solve a data transmission conflict problem in a multi-link communication process.

In an embodiment, the apparatus further includes a generation module.

The generation module is configured to generate the NAV update parameter according to the network transmission and state update information.

In an embodiment, the generation module is configured to:
set the NAV update parameter to an initial value, and update the NAV update parameter according to at least one of:
in a case where a CTS frame is sent to a third station through the BSS where the second link is located, updating the NAV update parameter according to duration information indicated by the CTS frame;
in a case where a PPDU of a third station is received through the BSS where the second link is located, updating the NAV update parameter according to duration information indicated by the PPDU of the third station; or
in a case where a transmission opportunity of the BSS where the second link is located is acquired and a PPDU is sent to a third station through the BSS where the second link is located, updating the NAV update parameter according to duration information of the transmission opportunity or duration information indicated by a PPDU sent to the third station.

In an embodiment, the feedback module is configured to:
feed back the NAV update parameter to the Non-AP MLD through the first link in a case where the NAV update parameter is 0 or non-0; or
feed back the NAV update parameter to the Non-AP MLD through the first link in a case where the NAV update parameter is greater than 0.

In an embodiment, the feedback module is configured to:
send the NAV update parameter to the second station through an access point associated with the first link in the AP MLD and the first station in sequence.

In an embodiment, the NAV update parameter is fed back by an acknowledgement reply frame, and the acknowledgement reply frame includes an ACK frame or a BA frame; or the NAV update parameter is fed back through an NAV control frame, and the NAV control frame is fed back after a first frame interval after the PPDU of the first station is transmitted or after a second frame interval after an acknowledgement reply frame is transmitted.

In an embodiment, the apparatus further includes a broadcast module.

The broadcast module is configured to broadcast multi-link capability information, where the multi-link capability information includes at least one of the following:
At least one access point in the AP MLD supports or does not support carrying an NAV update parameter of other links other than the link where the at least one access point is located.

At least one access point in the AP MLD supports or does not support carrying a feeding back operation parameter of the NAV of other links other than a link where the at least one access point is located.

In an embodiment, the apparatus further includes a first association module.

The first association module is configured to receive an association request and determine, according to the association request, at least one of the following information:
a station associated with each access point of the AP MLD in the Non-AP MLD;
a link connection relationship between the AP MLD and the Non-AP MLD;
a link that does not support simultaneous transmission and reception;
supporting capability of the AP MLD to feed back the NAV update parameter;
supporting capability of a station in the Non-AP MLD to receive the NAV update parameter; or
a feeding back operation parameter of the NAV.

In an embodiment, the PPDU includes preamble or MPDU frame header information, and the preamble or the MPDU frame header information is used for triggering and recording the network transmission and state update information.

In an embodiment, a MPDU corresponding to the PPDU includes NAV policy indication information for indicating at least one of the following:
not feeding back the NAV update parameter;
feeding back the NAV update parameter in a case where the NAV update parameter is 0 or non-0; or
feeding back the NAV update parameter in a case where the NAV update parameter is greater than 0.

In an embodiment, the NAV control frame is used for indicating the number of pieces of carried network transmission and state update information, an NAV value, and a target station corresponding to the network transmission and state update information.

The parameter feedback apparatus provided in this embodiment and the parameter feedback method provided in the preceding embodiments belong to the same concept. For technical details not described in detail in this embodiment, reference may be made to any one of the preceding embodiments.

Embodiments of the present application further provide a parameter update apparatus. The parameter update apparatus includes a parameter reception module and an update module.

The parameter reception module is configured to acquire, after a specific frame interval after an end of a first station sending a PPDU to an AP MLD through a first link, an NAV update parameter of a second station in the Non-AP MLD through the first link, where the NAV update parameter is determined according to network transmission and state update information of an NAV of the second station in a BSS where the second link is located.

The update module is configured to update, in a case where the NAV update parameter is acquired, a local NAV parameter according to the NAV update parameter.

In the embodiments of the present application, during a period that the Non-AP MLD of the NSTR sends data to the AP MLD through the first link (that is, during a period that the Non-AP MLD is located in the blind zone of the second link), the parameter update apparatus receives the NAV update parameter through the first link, and a local NAV parameter is updated accordingly as a basis for determining a data transmission opportunity, so as to solve a data transmission conflict problem in a multi-link communication process.

In an embodiment, the update module is configured to
in a case where the NAV update parameter is 0, use the local NAV parameter as an updated local NAV parameter;
in a case where the NAV update parameter is greater than the local NAV parameter, use a difference between a NAV value corresponding to a transmission time of the NAV update parameter and the NAV update parameter as an updated local NAV parameter; and
in a case where the NAV update parameter is less than the local NAV parameter, use the local NAV parameter as an updated local NAV parameter.

In an embodiment, the NAV update parameter is sent to the second station through an access point associated with the first link in the AP MLD and the first station in sequence.

In an embodiment, the NAV update parameter is acquired by an acknowledgement reply frame, and the acknowledgement reply frame includes an ACK frame or a BA frame; or the NAV update parameter is acquired through an NAV control frame, and the NAV control frame is acquired after a first frame interval after the PPDU of the first station is transmitted or after a second frame interval after an acknowledgement reply frame is transmitted.

In an embodiment, the apparatus further includes a broadcast reception module.

The broadcast reception module is configured to receive multi-link capability information, where the multi-link capability information includes at least one of the following:
At least one access point in the AP MLD supports or does not support carrying an NAV update parameter of other links other than the link where the at least one access point is located.

At least one access point in the AP MLD supports or does not support carrying a feeding back operation parameter of the NAV of other links other than a link where the at least one access point is located.

In an embodiment, the apparatus further includes a second association module.

The second association module is configured to send an association request, where the association request is used for requesting at least one of the following information:
a station associated with each access point of the AP MLD in the Non-AP MLD;
a link connection relationship between the AP MLD and the Non-AP MLD;
a link that does not support simultaneous transmission and reception;
supporting capability of the AP MLD to feed back the NAV update parameter;
supporting capability of a station in the Non-AP MLD to receive the NAV update parameter; or
a feeding back operation parameter of the NAV.

In an embodiment, the PPDU includes preamble or MPDU frame header information, and the preamble or the MPDU frame header information is used for triggering and recording the network transmission and state update information.

In an embodiment, a MPDU corresponding to the PPDU includes NAV policy indication information for indicating at least one of the following:
not feeding back the NAV update parameter;
feeding back the NAV update parameter in a case where the NAV update parameter is 0 or non-0; or
feeding back the NAV update parameter in a case where the NAV update parameter is greater than 0.

In an embodiment, the NAV control frame is used for indicating the number of pieces of carried network transmission and state update information, an NAV value, and a target station corresponding to the network transmission and state update information.

The parameter update apparatus provided in this embodiment and the parameter update method provided in the preceding embodiments belong to the same concept. For technical details not described in detail in this embodiment, reference may be made to any one of the preceding embodiments.

Embodiments of the present application further provide an association apparatus. The association apparatus includes a broadcast module, a request reception module and a response module.

The broadcast module is configured to broadcast multi-link capability information, where broadcasting the multi-link capability information includes supporting capability of the AP MLD to feed back an NAV update parameter.

The request reception module is configured to receive an association request of the Non-AP MLD, where the association request is used for determining a link connection relationship between the AP MLD and the Non-AP MLD, supporting capability of a link for simultaneous transmission and reception, and supporting capability of a station in the Non-AP MLD to receive the NAV update parameter.

The response module is configured to send association response information to the Non-AP MLD according to the association request.

The association apparatus in this embodiment establishes a multi-link connection of the NSTR by broadcasting the multi-link capability information and responding the association request of the Non-AP MLD, so that the first link can be provided for feeding back the NAV update parameter during the period that the second link is in the blind zone. For technical details not described in detail in the embodiment, reference may be made to any one of the preceding embodiments.

In an embodiment, the association apparatus is further configured to perform, according to the association response information, the parameter feedback method applied to the AP MLD in the above embodiments.

The association apparatus provided in this embodiment and the association method applied to the AP MLD provided in the preceding embodiments belong to the same concept. For technical details not described in detail in this embodiment, reference may be made to any one of the preceding embodiments.

Embodiments of the present application further provide another association apparatus. The association apparatus includes a broadcast reception module, a request module and a response reception module.

The broadcast reception module is configured to receive multi-link capability information broadcasted by the AP MLD, where broadcasting the multi-link capability information includes supporting capability of the AP MLD to feed back an NAV update parameter.

The request module is configured to send an association request to the AP MLD according to the multi-link capability information, where the association request is used for determining a link connection relationship between the AP MLD and the Non-AP MLD, supporting capability of a link for simultaneous transmission and reception, and supporting capability of a station in the Non-AP MLD to receive the NAV update parameter.

The response reception module is configured to receive the association response information of the AP MLD.

The association apparatus in this embodiment establishes a multi-link connection of the NSTR by sending an association request and receiving association response information of the AP MLD, so that the fed back NAV update parameter can be received through the first link during the period that the second link is in the blind zone, thereby updating a local NAV parameter.

In an embodiment, the association apparatus is further configured to perform, according to the association response information, the parameter update method applied to the Non-AP MLD in the above embodiments.

The association apparatus provided in this embodiment and the association method applied to the Non-AP MLD provided in the preceding embodiments belong to the same concept. For technical details not described in detail in this embodiment, reference may be made to any one of the preceding embodiments.

Embodiments of the present application further provide a communication node. FIG. 12 is a hardware structural diagram of a communication node according to an embodiment. As shown in FIG. 12, the communication node includes a memory 52, a processor 51, and a computer program stored on the memory and running on the processor, where when executing the program, the processor 51 performs the parameter feedback method, the parameter update method or the association method.

The communication node may further include the memory 52; one or more processors 51 may be provided in the communication node, and one processor 51 is used as an example in FIG. 12; the memory 52 is configured to store one or more programs; and when executed by the one or more processors 51, the one or more programs cause the one or more processors 51 to implement the parameter feedback method, the parameter update method or the association method in the embodiments of the present application.

It is to be noted that in the case of performing the parameter feedback method or the association method applied to the AP MLD, the communication node is an access point in the AP MLD. In the case of performing the parameter update method or the association method applied to the Non-AP MLD, the communication node is a station in the Non-AP MLD.

The communication node further includes a communication apparatus 53, an input apparatus 54 and an output apparatus 55.

The processor 51, the memory 52, the communication apparatus 53, the input apparatus 54, and the output apparatus 55 in the communication node may be connected through a bus or in other manners, and the connection through the bus is used as an example in FIG. 12.

The input apparatus 54 may be configured to receive inputted digital or character information and generate key signal input related to user settings and function control of the communication node. The output apparatus 55 may include display devices such as a display screen.

The communication apparatus 53 may include a receiver and a transmitter. The communication apparatus 53 is configured to perform information transmission and reception and communication under the control of the processor 51.

As a computer readable storage medium, the memory 52 may be configured to store software programs, computer executable programs and modules, such as program instructions/modules corresponding to the parameter feedback method in the embodiments of the present application. The memory 52 may include a program storage region and a data storage region, where the program storage region may store an operating system and an application program required by at least one function, and the data storage region may store data or the like created according to the use of the communication node. Additionally, the memory 52 may include a high-speed random-access memory and may also include a nonvolatile memory such as at least one disk memory, flash memory or another nonvolatile solid-state memory. In some examples, the memory 52 may further include memories located remotely relative to the processors 51, and these remote memories may be connected to the communication node via a network. Examples of the above network include, but are not limited to, the Internet, an intranet, a local area network, a mobile communication network and a combination thereof.

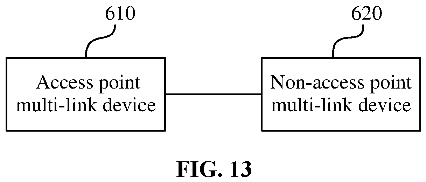

Embodiments of the present application further provide an association system. FIG. 13 is a structural diagram of a communication system according to an embodiment. As shown in FIG. 13, the system includes an access point multi-link device 610 and a non-access point multi-link device 620. The access point multi-link device 610 is connected to the non-access point multi-link device 620 through a first link and a second link, and the first link and the second link of the non-access point multi-link device 620 do not support simultaneous transmission and reception. The access point multi-link device 610 is configured to perform the parameter feedback method described above or the association method applied to the AP MLD. The non-access point multi-link device 620 is configured to perform the parameter update method described above or the association method applied to the non-access point multi-link device 620. It is to be noted that for technical details not described in detail in the embodiment, reference may be made to any one of the preceding embodiments.

In the embodiments of the present application, during a period that the non-access point multi-link device 620 sends data to the access point multi-link device 610 through the first link (that is, during a period that the Non-AP MLD is located in the blind zone of the second link), the access point multi-link device 610 records the network transmission and state update information about the NAV of the second station, and feeds back the NAV update parameter of the second station through the first link, and the non-access point multi-link device 620 receives the NAV update parameter through the first link and updates the local NAV parameter accordingly as a basis for determining a data transmission opportunity, so that the NAV loss due to the blind zone and the data transmission conflict problem are solved in the process of the multi-link communication.

In an embodiment, the non-access point multi-link device 620 includes a first station and a second station. The access point multi-link device 610 includes an access point recording the network transmission and state update information of the second link and an access point receiving the PPDU of the first station. The NAV update parameters is fed back to the second station by the access point recording the network transmission and state update information of the second link through the access point receiving the PPDU of the first station and the first station in sequence.

In an embodiment, the access point multi-link device 610 broadcasts multi-link capabilities. The non-access point multi-link device 620 sends an association request to the access point multi-link device 610. The access point multi-link device 610 sends association response information to the non-access point multi-link device 620 according to the association request.

In an embodiment, an association request of a non-access point multi-link device 620 is used for determining a link connection relationship between the AP MLD and the non-access point multi-link device, supporting capability of a link for simultaneous transmission and reception, supporting capability of the AP MLD to feed back the NAV update parameter, and supporting capability of a station in the non-access point multi-link device to receive the NAV update parameter.

In an embodiment, the access point multilink device 610 generates the NAV update parameter according to the network transmission and state update information.

In an embodiment, the access point multilink device 610 sets the NAV update parameter to an initial value, and updates the NAV update parameter according to at least one of:
in a case where a CTS frame is sent to a third station through the BSS where the second link is located, updating the NAV update parameter according to duration information indicated by the CTS frame;
in a case where a PPDU of a third station is received through the BSS where the second link is located, updating the NAV update parameter according to duration information indicated by the PPDU of the third station; or
in a case where a transmission opportunity of the BSS where the second link is located is acquired and a PPDU is sent to a third station through the BSS where the second link is located, updating the NAV update parameter according to duration information of the transmission opportunity or duration information indicated by a PPDU sent to the third station.

In an embodiment, in a case where the NAV update parameter is 0 or non-0, the access point multi-link device 610 feeds back the NAV update parameter to the non-access point multi-link device through the first link; or in a case where the NAV update parameter is greater than 0, the access point multi-link device 610 feeds back the NAV update parameter to the non-access point multi-link device through the first link.

In an embodiment, the access point multi-link device 610 sends the NAV update parameter to the second station through an access point associated with the first link in the AP MLD and the first station in sequence.

In an embodiment, the NAV update parameter is fed back through an acknowledgement reply frame including an ACK frame or a BA frame; or the NAV update parameter is fed back through an NAV control frame, and the NAV control frame is fed back after a first frame interval after the PPDU of the first station is transmitted or after the second frame interval after the acknowledgement reply frame is transmitted.

In an embodiment, the access point multi-link device 610 also broadcasts multi-link capability information, where the multi-link capability information includes at least one of the following:
At least one access point in the AP MLD supports or does not support carrying an NAV update parameter of other links other than the link where the at least one access point is located.

At least one access point in the AP MLD supports or does not support carrying a feeding back operation parameter of the NAV of other links other than a link where the at least one access point is located.

In an embodiment, the access point multi-link device 610 also receives an association request and determines, according to the association request, at least one of the following information:
a station associated with each access point of the AP MLD in the non-access point multi-link device;
a link connection relationship between the AP MLD and the non-access point multi-link device;
a link that does not support simultaneous transmission and reception;
supporting capability of the AP MLD to feed back the NAV update parameter;
supporting capability of a station in the non-access point multi-link device to receive the NAV update parameter; or
a feeding back operation parameter of the NAV.

In an embodiment, the PPDU includes preamble or MPDU frame header information, and the preamble or the MPDU frame header information is used for triggering and recording the network transmission and state update information.

In an embodiment, a MPDU corresponding to the PPDU includes NAV policy indication information for indicating at least one of the following:
not feeding back the NAV update parameter;
feeding back the NAV update parameter in a case where the NAV update parameter is 0 or non-0; or
feeding back the NAV update parameter in a case where the NAV update parameter is greater than 0.

In an embodiment, the NAV control frame is used for indicating the number of pieces of carried network transmission and state update information, an NAV value, and a target station corresponding to the network transmission and state update information.

In an embodiment, after a specific frame interval after an end of a first station sending a PPDU to an AP MLD through a first link, the non-access point multi-link device 620 acquires an NAV update parameter of a second station in the non-access point multi-link device through the first link, where the NAV update parameter is determined according to network transmission and state update information of an NAV of the second station in a BSS where the second link is located.

In a case where the NAV update parameter is acquired, a local NAV parameter is updated according to the NAV update parameter.

In an embodiment, in a case where the NAV update parameter is 0, the non-access point multi-link device 620 uses the local NAV parameter as an updated local NAV parameter.

In a case where the NAV update parameter is greater than the local NAV parameter, the non-access point multi-link device 620 use a difference between a NAV value corresponding to a transmission time of the NAV update parameter and the NAV update parameter as an updated local NAV parameter.

In a case where the NAV update parameter is less than the local NAV parameter, the non-access point multi-link device 620 uses the local NAV parameter as an updated local NAV parameter.

In an embodiment, the non-access point multi-link device 620 is also configured to receive multi-link capability information, where the multi-link capability information includes at least one of the following:
At least one access point in the AP MLD supports or does not support carrying an NAV update parameter of other links other than the link where the at least one access point is located.

At least one access point in the AP MLD supports or does not support carrying a feeding back operation parameter of the NAV of other links other than a link where the at least one access point is located.

In an embodiment, the non-access point multi-link device 620 is also configured to send an association request, where the association request is used for requesting at least one of the following information:
a station associated with each access point of the AP MLD in the non-access point multi-link device;
a link connection relationship between the AP MLD and the non-access point multi-link device;
a link that does not support simultaneous transmission and reception;
supporting capability of the AP MLD to feed back the NAV update parameter;
supporting capability of a station in the non-access point multi-link device to receive the NAV update parameter; or
a feeding back operation parameter of the NAV.

The embodiments of the present application further provide a storage medium for storing a computer program which, when executed by a processor, implements the parameter feedback method, the parameter update method or the association method according to any one of the embodiments of the present application.

The parameter feedback method includes: recording, during a period that a PPDU sent by a first station in a non-access point multi-link device is received through a first link, network transmission and state update information about an NAV of a second station in the non-access point multi-link device in a BSS where a second link is located, where the AP MLD is connected to the non-access point multi-link device through the first link and the second link, and the first link and the second link of the non-access point multi-link device do not support simultaneous transmission and reception; determining a feedback state on an NAV update parameter of the second station according to the network transmission and state update information, where the feedback state includes feedback or non-feedback; and in a case where the feedback state is feedback, feeding back the NAV update parameter to the non-access point multi-link device through the first link after a specific frame interval after an end of reception of the PPDU.

The parameter update method includes: acquiring, after a specific frame interval after an end of a first station sending a PPDU to an AP MLD through a first link, an NAV update parameter of a second station in the non-access point multi-link device through the first link, where the NAV update parameter is determined according to network transmission and state update information of an NAV of the second station in a BSS where the second link is located; and in a case where the NAV update parameter is acquired, updating a local NAV parameter according to the NAV update parameter.

The association method includes: broadcasting multi-link capability information, where broadcasting the multi-link capability information includes supporting capability of the AP MLD to feed back an NAV update parameter; receiving an association request of an Non-AP MLD, where the association request is used for determining a link connection relationship between the AP MLD and the non-access point multi-link device, supporting capability of a link for simultaneous transmission and reception, and supporting capability of a station in the non-access point multi-link device to receive the NAV update parameter; and sending association response information to the non-access point multilink device according to the association request.

Alternatively, the association method includes: receiving multi-link capability information broadcasted by the AP MLD, where broadcasting the multi-link capability information includes supporting capability of the AP MLD to feed back an NAV update parameter; sending an association request to the AP MLD according to the multi-link capability information, where the association request is used for determining a link connection relationship between the AP MLD and the non-access point multi-link device, supporting capability of a link for simultaneous transmission and reception, and supporting capability of a station in the non-access point multi-link device to receive the NAV update parameter; and receiving association response information of the AP MLD.

A computer storage medium in the embodiment of the present application may adopt any combination of one or more computer-readable media. The computer-readable media may be computer-readable signal media or computer-readable storage media. The computer-readable storage medium may be, for example, but is not limited to, an electrical, magnetic, optical, electromagnetic, infrared, or semiconductor system, apparatus, or device, or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable CD-ROM, an optical storage element, a magnetic storage device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate or transmit a program used by or used in conjunction with an instruction execution system, apparatus or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of the present application may be written in one or more programming languages or a combination of multiple programming languages. The programming languages include object-oriented programming languages such as Java, Smalltalk, and C++ and may further include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In the case related to the remote computer, the remote computer may be connected to the user computer via any type of network including a local area network (LAN) or a wide area network (WAN) or may be connected to an external computer (for example, via the Internet through an Internet service provider).

The preceding are only example embodiments of the present application and not intended to limit the scope of the present application.

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic or any combination thereof. For example, some aspects may be implemented in hardware while other aspects may be implemented in firmware or software executable by a controller, a microprocessor or another calculation apparatus, though the present application is not limited thereto.

Embodiments of the present application may be implemented through the execution of computer program instructions by a data processor of a mobile apparatus, for example, implemented in a processor entity, by hardware or by a combination of software and hardware. The computer program instructions may be assembly instructions, instruction set architecture (ISA) instructions, machine instructions, machine-related instructions, microcodes, firmware instructions, status setting data or source or object codes written in any combination of one or more programming languages.

A block diagram of any logic flow among the drawings of the present application may represent program steps, may represent interconnected logic circuits, modules and functions, or may represent a combination of program steps with logic circuits, modules and functions. Computer programs may be stored in the memory. The memory may be of any type suitable for a local technical environment and may be implemented using any suitable data storage technology, such as, but not limited to, a read-only memory (ROM), a random-access memory (RAM) and an optical memory device and system (a digital video disc (DVD) or a compact disk (CD)). Computer-readable media may include non-transitory storage media. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

## Claims

1. A parameter feedback method, applied to an access point multi-link device (AP MLD), comprising:
recording, during a period that a physical layer protocol data unit (PPDU) sent by a first station in a non-access point multi-link device is received through a first link, network transmission and state update information about a network allocation vector (NAV) of a second station in the non-access point multi-link device in a basic service set (BSS) where a second link is located, wherein the AP MLD is connected to the non-access point multi-link device through the first link and the second link, and the first link and the second link of the non-access point multi-link device do not support simultaneous transmission and reception;
determining a feedback state on an NAV update parameter of the second station according to the network transmission and state update information, wherein the feedback state comprises feedback or non-feedback; and
in a case where the feedback state is feedback, feeding back the NAV update parameter to the non-access point multi-link device through the first link after a specific frame interval after an end of reception of the PPDU.

2. The method of claim 1, further comprising:
generating the NAV update parameter according to the network transmission and state update information.

3. The method of claim 2, wherein generating the NAV update parameter according to the network transmission and state update information comprises:
setting the NAV update parameter to an initial value, and updating the NAV update parameter according to at least one of:
in a case where a clear to send (CTS) frame is sent to a third station through the BSS where the second link is located, updating the NAV update parameter according to duration information indicated by the CTS frame;
in a case where a PPDU of a third station is received through the BSS where the second link is located, updating the NAV update parameter according to duration information indicated by the PPDU of the third station; or
in a case where a transmission opportunity of the BSS where the second link is located is acquired and a PPDU is sent to a third station through the BSS where the second link is located, updating the NAV update parameter according to duration information of the transmission opportunity or duration information indicated by a PPDU sent to the third station.

4. The method of claim 1, wherein feeding back the NAV update parameter to the non-access point multi-link device through the first link comprises:
in a case where the NAV update parameter is 0 or non-0, feeding back the NAV update parameter to the non-access point multi-link device through the first link; or
in a case where the NAV update parameter is greater than 0, feeding back the NAV update parameter to the non-access point multi-link device through the first link.

5. The method of claim 1, wherein feeding back the NAV update parameter to the non-access point multi-link device through the first link comprises:
sending the NAV update parameter to the second station through an access point associated with the first link in the AP MLD and the first station in sequence.

6. The method of claim 5, wherein the NAV update parameter is fed back by an acknowledgement reply frame, and the acknowledgement reply frame comprises an acknowledgement (ACK) frame or a block acknowledgement (BA) frame; or
the NAV update parameter is fed back through an NAV control frame, and the NAV control frame is fed back after a first frame interval after the PPDU of the first station is transmitted or after a second frame interval after an acknowledgement reply frame is transmitted.

7. The method of claim 1, further comprising:
broadcasting multi-link capability information, wherein the multi-link capability information comprises at least one of the following:
at least one access point in the AP MLD supports or does not support carrying an NAV update parameter of other links other than a link where the at least one access point is located; or
at least one access point in the AP MLD supports or does not support carrying a feeding back operation parameter of the NAV of other links other than a link where the at least one access point is located.

8. The method of claim 1, further comprising:
receiving an association request and determining, according to the association request, at least one of the following information:
a station associated with each access point of the AP MLD in the non-access point multi-link device;
a link connection relationship between the AP MLD and the non-access point multi-link device;
a link that does not support simultaneous transmission and reception;
supporting capability of the AP MLD to feed back the NAV update parameter;
supporting capability of a station in the non-access point multi-link device to receive the NAV update parameter; or
a feeding back operation parameter of the NAV.

9. The method of claim 1, wherein the PPDU comprises preamble or media access control (MAC) layer protocol data unit (MPDU) frame header information, and the preamble or the MPDU frame header information is used for triggering and recording the network transmission and state update information.

10. The method of claim 1, wherein a MPDU corresponding to the PPDU comprises NAV policy indication information for indicating at least one of the following:
not feeding back the NAV update parameter;
feeding back the NAV update parameter in a case where the NAV update parameter is 0 or non-0; or
feeding back the NAV update parameter in a case where the NAV update parameter is greater than 0.

11. The method of claim 6, wherein the NAV control frame is used for indicating a number of pieces of carried network transmission and state update information, an NAV value, and a target station corresponding to the network transmission and state update information.

12. A parameter update method, applied to a non-access point multi-link device, comprising:
acquiring, after a specific frame interval after an end of a first station sending a physical layer protocol data unit (PPDU) to an access point multi-link device (AP MLD) through a first link, a network allocation vector (NAV) update parameter of a second station in the non-access point multi-link device through the first link, wherein the NAV update parameter is determined according to network transmission and state update information of an NAV of the second station in a basic service set (BSS) where the second link is located; and
in a case where the NAV update parameter is acquired, updating a local NAV parameter according to the NAV update parameter.

13. The method of claim 12, wherein updating the local NAV parameter according to the NAV update parameter comprises:
in a case where the NAV update parameter is 0, using the local NAV parameter as an updated local NAV parameter;
in a case where the NAV update parameter is greater than the local NAV parameter, using a difference between a NAV value corresponding to a transmission time of the NAV update parameter and the NAV update parameter as an updated local NAV parameter; and
in a case where the NAV update parameter is less than the local NAV parameter, using the local NAV parameter as an updated local NAV parameter.

14. The method of claim 12, wherein the NAV update parameter is sent to the second station through the access point associated with the first link in the AP MLD and the first station in sequence.

15. The method of claim 12, wherein the NAV update parameter is acquired through an acknowledgement reply frame, and the acknowledgement reply frame comprises an acknowledgement (ACK) frame or a block acknowledgement (BA) frame; or
the NAV update parameter is acquired through an NAV control frame, and the NAV control frame is acquired after a first frame interval after the PPDU of the first station is transmitted or after a second frame interval after an acknowledgement reply frame is transmitted.

16. The method of claim 12, further comprising:
receiving multi-link capability information, wherein the multi-link capability information comprises at least one of the following:
at least one access point in the AP MLD supports or does not support carrying an NAV update parameter of other links other than the link where the at least one access point is located; or
at least one access point in the AP MLD supports or does not support carrying a feeding back operation parameter of the NAV of other links other than a link where the at least one access point is located.

17. The method of claim 12, further comprising:
sending an association request, wherein the association request is used for requesting at least one of the following information:
a station associated with each access point of the AP MLD in the non-access point multi-link device;
a link connection relationship between the AP MLD and the non-access point multi-link device;
a link that does not support simultaneous transmission and reception;
supporting capability of the AP MLD to feed back the NAV update parameter;
supporting capability of a station in the non-access point multi-link device to receive the NAV update parameter; or
a feeding back operation parameter of the NAV.

18. The method of claim 12, wherein the PPDU comprises preamble or media access control (MAC) layer protocol data unit (MPDU) frame header information, and the preamble or the MPDU frame header information is used for triggering and recording the network transmission and state update information.

19. The method of claim 12, wherein a MPDU corresponding to the PPDU comprises NAV policy indication information for indicating at least one of the following:
not feeding back the NAV update parameter;
feeding back the NAV update parameter in a case where the NAV update parameter is 0 or non-0; or
feeding back the NAV update parameter in a case where the NAV update parameter is greater than 0.

20. The method of claim 15, wherein the NAV control frame is used for indicating a number of pieces of carried network transmission and state update information, an NAV value, and a target station corresponding to the network transmission and state update information.

21. An association method, applied to an access point multi-link device (AP MLD), comprising:
broadcasting multi-link capability information, wherein the multi-link capability information comprises supporting capability of the AP MLD to feed back a network allocation vector (NAV) update parameter;
receiving an association request of a non-access point multi-link device, wherein the association request is used for determining a link connection relationship between the AP MLD and the non-access point multi-link device, supporting capability of a link for simultaneous transmission and reception, and supporting capability of a station in the non-access point multi-link device to receive the NAV update parameter; and
sending association response information to the non-access point multilink device according to the association request.

22. The method of claim 21, further comprising:
performing the parameter feedback method of any one of claims 1 to 11 according to the association response information.

23. An association method, applied to a non-access point multi-link device, comprising:
receiving multi-link capability information broadcasted by an access point multi-link device (AP MLD), wherein the multi-link capability information comprises supporting capability of the AP MLD to feed back a network allocation vector (NAV) update parameter;
sending an association request to the AP MLD according to the multi-link capability information, wherein the association request is used for determining a link connection relationship between the AP MLD and the non-access point multi-link device, supporting capability of a link for simultaneous transmission and reception, and supporting capability of a station in the non-access point multi-link device to receive the NAV update parameter; and
receiving association response information of the AP MLD.

24. The method of claim 23, further comprising:
performing the parameter update method according to any one of claims 12 to 20 according to the association response information.

25. A communication node, comprising a memory, a processor, and a computer program which is stored on the memory and capable of running on the processor, wherein the processor, when executing the computer program, implements the parameter feedback method according to any one of claims 1 to 11 or the parameter update method according to any one of claims 12 to 20 or the association method according to any one of claims 21 to 22 or the association method according to any one of claims 23 to 24.

26. A communication system, comprising an access point multi-link device and a non-access point multi-link device;
wherein the access point multilink device is configured to perform the parameter feedback method according to any one of claims 1 to 11 or the association method according to any one of claims 21 to 22; and
wherein the non-access point multilink device is configured to perform the parameter update method according to any one of claims 12 to 20 or the association method according to any one of claims 23 to 24.

27. A computer-readable storage medium, configured to store computer programs which, when executed by a processor, implements the parameter feedback method according to any one of claims 1 to 11 or the parameter update method according to any one of claims 12 to 20 or the association method according to any one of claims 21 to 22 or the association method according to any one of claims 23 to 24.
